# DEMANDE DE BREVET EUROPEEN

(11) **EP 1 302 139 A1**
(43) Date de publication de la demande: **16.04.2003**
(21) Numéro de dépôt: 02292534.1
(22) Date de dépôt: 15.10.2002
(51) Int. Cl.: A47J 31/54, A47J 31/00

(54) **Systeme automatique de distribution d'eau chaude pour la preparation de boissons infusees**

(30) Priorité: 15.10.2001 FR 0113245
(71) Demandeur: Rosanis, Jean-Francois, 92160 Antony (FR)
(72) Inventeur: Rosanis, Jean-Francois, 92160 Antony (FR)
(74) Mandataire: Abello, Michel

(57) **Abrégé**

Fontaine à eau chaude automatique (1) comportant :
- un circuit d'eau (15) apte à conduire un flux d'eau depuis une entrée d'eau jusqu'à un organe de distribution d'eau, ledit circuit comprenant un moyen filtrant (19) et un moyen chauffant (20),
- un moyen d'obturation commandé (18),
- un moyen de réglage de puissance commandé,
- un moyen de sélection de température (62a-c),
- un moyen de déclenchement (62a-c, 81),
- une unité de commande (21) apte à répondre à un signal de déclenchement en commandant, d'une part, ledit moyen d'obturation pour autoriser une circulation dudit flux d'eau et, d'autre part, ledit moyen de réglage pour régler la puissance de chauffage dissipée par le moyen chauffant, de sorte qu'une quantité d'eau, portée sensiblement à la température de sortie souhaitée, est distribuée par l'intermédiaire de l'organe de distribution en réponse audit signal de déclenchement.

## Description

La présente invention concerne une fontaine à eau chaude automatique pour la préparation de boissons infusées.

On sait que les caractéristiques gustatives des boissons infusées, notamment des infusions de thé, dépendent en grande partie des caractéristiques physico-chimiques de l'eau utilisée pour les préparer, c'est-à-dire de la nature et de la concentration des substances chimiques en solution dans l'eau : minéraux, polluants, acides, chlore, etc. De ce fait, l'eau du robinet brute ne permet en général pas de réaliser des boissons infusées satisfaisantes. Quant aux eaux minérales, elles présentent un coût plus élevé et n'ont pas non plus forcément des caractéristiques physico-chimiques satisfaisantes quant à la minéralité et l'acidité.

On sait aussi que les caractéristiques gustatives des boissons infusées, notamment des infusions de thé, dépendent de la température de l'eau utilisée pour les préparer. Ainsi, en fonction de la nature d'une infusion à préparer, il est souhaitable de contrôler précisément la température de l'eau utilisée pour sa préparation. Une température d'eau inadaptée peut dénaturer la saveur des substances infusées.

On connaît des réservoirs à thermostat qui permettent de conserver une grande quantité d'eau à une température contrôlée. Cependant, ces dispositifs présentent l'inconvénient de favoriser le développement d'une faune microbienne dans le réservoir d'eau, ce qui présente des risques sanitaires.

Le but de l'invention est de permettre la préparation de boissons infusées ayant des caractéristiques physico-chimiques et gustatives satisfaisantes d'une manière rapide, automatisée et contrôlée, notamment dans le cadre d'une organisation de restauration collective, en résolvant les problèmes précités.

Pour cela, l'invention fournit une fontaine à eau chaude automatique pour la préparation de boissons infusées, caractérisée par le fait qu'elle comporte :
- une entrée d'eau apte à être reliée à un réseau de distribution d'eau froide pour admettre de l'eau froide depuis ledit réseau de distribution,
- un organe de distribution d'eau comportant une ouverture de sortie et apte à distribuer de l'eau à travers ladite ouverture de sortie,
- un circuit d'eau apte à conduire un flux d'eau depuis ladite entrée d'eau jusqu'audit organe de distribution d'eau, ledit circuit comprenant un moyen filtrant apte à filtrer ledit flux d'eau et un moyen chauffant apte à chauffer ledit flux d'eau,
- un moyen d'obturation commandé apte à autoriser et à interdire une circulation dudit flux d'eau dans ledit circuit,
- un moyen de réglage de puissance commandé apte à régler une puissance de chauffage dissipée par ledit moyen chauffant,
- un moyen de sélection de température actionnable par un utilisateur pour sélectionner une température de sortie souhaitée dudit flux d'eau au niveau de l'organe de distribution,
- un moyen de déclenchement actionnable par un utilisateur pour déclencher une distribution d'eau chaude par ladite fontaine,
- une unité de commande apte à recevoir depuis ledit moyen de déclenchement un signal de déclenchement et à recevoir depuis ledit moyen de sélection de température un signal de sélection de température représentatif de ladite température de sortie souhaitée, ladite unité de commande étant apte à répondre audit signal de déclenchement en commandant, d'une part, ledit moyen d'obturation pour autoriser une circulation dudit flux d'eau dans le circuit et, d'autre part, ledit moyen de réglage pour régler la puissance de chauffage dissipée par le moyen chauffant en fonction dudit signal de sélection de température, de sorte qu'une quantité d'eau, portée sensiblement à la température de sortie souhaitée représentée par le signal de sélection de température, est distribuée par l'intermédiaire de l'organe de distribution en réponse audit signal de déclenchement.

L'utilisation d'un moyen chauffant qui chauffe un flux d'eau en circulation permet d'éviter la stagnation d'eau chaude et donc un développement de microbes et un marquage métallique de l'eau.

Avantageusement, un capteur de température est agencé de manière à mesurer une température dudit flux d'eau à un niveau compris inclusivement entre une sortie du moyen chauffant et l'organe de distribution, ladite unité de commande étant apte à recevoir depuis ledit capteur de température un signal de mesure représentatif de la température d'eau mesurée par ledit capteur, ladite unité de commande étant apte à commander le moyen de réglage de puissance en fonction dudit signal de mesure de manière à modifier la puissance de chauffage dissipée par le moyen chauffant lorsqu'un écart entre ladite température mesurée et la température de sortie souhaitée est supérieur à une valeur prédéterminée.

Avantageusement, un moyen d'affichage permet d'afficher la valeur de température d'eau mesurée par ledit capteur et représentée par ledit signal de mesure et/ou la température de sortie souhaitée.

De préférence, le moyen de sélection de température est actionnable pour sélectionner ladite température souhaitée parmi un ensemble de valeurs prédéfinies, chaque valeur prédéfinie correspondant à un type d'infusion à préparer, lesdites valeurs prédéfinies comprenant une valeur entre 60°C et 95°C pour la préparation d'une infusion de thé vert, une valeur entre 50°C et 85°C pour la préparation d'une infusion de thé blanc et une valeur de sensiblement 95°C pour la préparation d'une infusion de thé noir.

Avantageusement, la fontaine selon l'invention distribue une quantité d'eau déterminée en réponse au signal déclenchement et ladite unité de commande est apte à commander successivement en réponse audit signal de déclenchement: une préchauffe du moyen chauffant sans circulation d'eau, une ouverture du moyen d'obturation pour autoriser la circulation dudit flux d'eau pendant une durée déterminée et une fermeture du moyen d'obturation pour interrompre la circulation du flux d'eau, ladite unité de commande étant apte à adapter une durée de ladite préchauffe du moyen chauffant en fonction du signal de sélection de température.

Avantageusement, un moyen de sélection de quantité d'eau est actionnable par un utilisateur pour sélectionner une quantité d'eau souhaitée, ladite unité de commande étant apte à recevoir depuis ledit moyen de sélection de quantité d'eau un signal de sélection de quantité représentatif de la quantité d'eau souhaitée, l'unité de commande étant apte à adapter ladite durée d'ouverture de l'organe d'obturation en fonction dudit signal de sélection de quantité de manière que ladite quantité d'eau distribuée par l'intermédiaire de l'organe de distribution en réponse au signal de déclenchement soit sensiblement égale à la quantité souhaitée, représentée par le signal de sélection de quantité.

Avantageusement, la fontaine à eau chaude selon l'invention comporte un chronomètre et une alarme, ladite unité de commande étant apte à déclencher ledit chronomètre à la fin de la distribution d'eau pour mesurer une durée d'infusion prédéterminée et à déclencher ladite alarme à la fin de ladite durée d'infusion.

De préférence, le moyen de déclenchement est constitué par le moyen de sélection de température et que le signal de déclenchement est constitué par le signal de sélection de température.

De préférence, le moyen chauffant comporte une source de rayonnement thermique, comme une lampe à incandescence halogène, une enveloppe interne étanche à l'eau et transparente audit rayonnement thermique qui entoure ladite source de rayonnement, une enveloppe externe étanche à l'eau qui est assemblée à ladite enveloppe interne de manière à définir entre elles un espace de circulation d'eau, un passage d'entrée et un passage de sortie d'eau étant ménagés dans ladite enveloppe externe à deux extrémités de celle-ci pour permettre une traversée du moyen chauffant par ledit flux d'eau.

L'utilisation d'un chauffage radiatif permet d'obtenir un chauffage de l'eau homogène et sans contact entre l'eau et la source de chaleur, ce qui est avantageux par rapport à un chauffage par conduction et/ou convection.

Avantageusement, l'enveloppe interne et l'enveloppe externe sont réalisées en quartz, l'enveloppe externe portant un revêtement extérieur réfléchissant pour réfléchir ledit rayonnement thermique vers l'espace de circulation d'eau.

Avantageusement, le moyen filtrant comporte au moins un étage de filtration mécanique par une membrane apte à retenir des matières en suspension de taille supérieure à 5 micromètres, et/ou au moins un étage de filtration par une résine échangeuse d'ion apte à éliminer du flux d'eau des métaux lourds, et/ou au moins un étage de filtration par une résine échangeuse d'ion apte à éliminer du flux d'eau des ions nitrate, nitrite et sulfate, et/ou au moins un étage de filtration par un charbon actif apte à éliminer du flux d'eau des matières organiques incluant des herbicides, des pesticides et des composés chlorés et/ou au moins un étage de filtration par une résine adsorbante apte à éliminer du flux d'eau les pesticides.

De préférence, le moyen filtrant est apte à traiter l'eau admise depuis le réseau de distribution de manière qu'elle présente un pH compris entre 6 et 7 et une dureté comprise entre 12 et 18 degrés Fr à la sortie du moyen filtrant.

Avantageusement, la fontaine à eau chaude selon l'invention comporte un moyen de réception d'eau apte à recevoir ledit flux d'eau à l'extérieur de l'ouverture de sortie de l'organe de distribution, ledit moyen de réception étant relié à un moyen d'évacuation pour évacuer ledit flux d'eau depuis ledit moyen de réception, ladite fontaine étant conçue et agencée de manière intégrée à un meuble, ledit meuble comportant un plateau supérieur sur lequel sont disposés l'organe de distribution, le moyen de réception d'eau, le moyen de sélection de température, le moyen de déclenchement, l'éventuel moyen de sélection de quantité et l'éventuel moyen d'affichage, ledit meuble comportant un corps sur lequel repose ledit plateau supérieur et dans lequel sont disposés le circuit d'eau, le moyen de réglage de puissance, le moyen d'obturation, l'unité de commande, et des moyens pour alimenter en électricité le moyen chauffant, le moyen d'obturation et l'unité de commande.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence au dessin annexé. Sur ce dessin :
- la figure 1 est une vue schématique d'une fontaine à eau chaude automatique réalisée selon la présente invention,
- la figure 2 est une vue en coupe selon la ligne II-II de la figure 3 d'un moyen chauffant de la fontaine de la figure 1,
- la figure 3 est une vue en coupe selon la ligne III-III de la figure 2 du moyen chauffant de figure 2,
- la figure 4 est une vue en coupe d'une unité de filtration de la fontaine de la figure 1,
- la figure 5 est un diagramme schématique d'une unité de commande de la fontaine de la figure 1,
- la figure 6 est un schéma bloc d'un procédé de commande de la fontaine de la figure 1,
- la figure 7 représente une variante de réalisation d'une platine de commande de la fontaine à eau chaude de la figure 1.

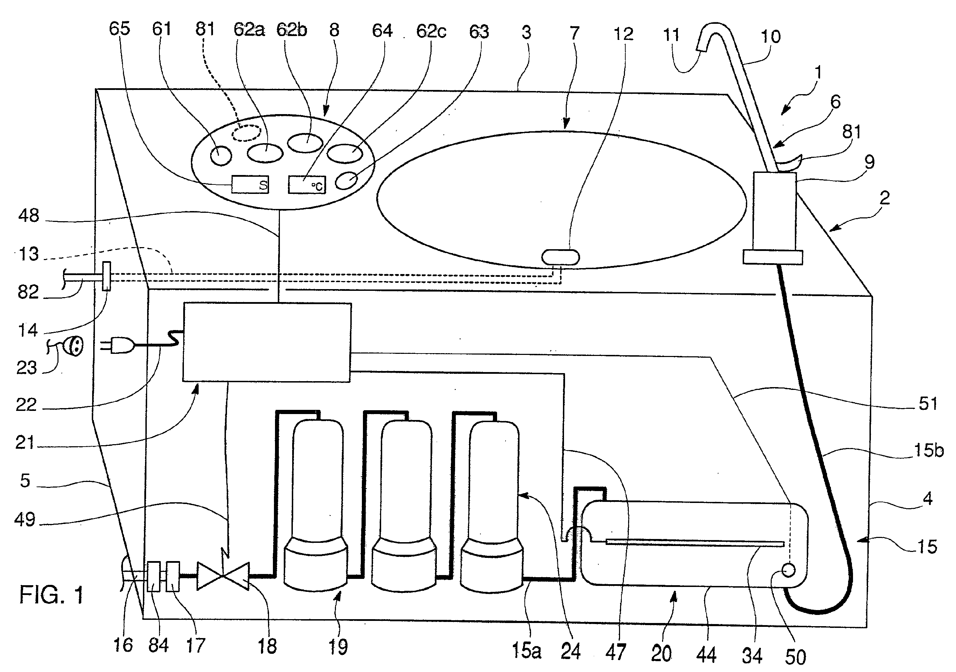

La figure 1 représente une fontaine à eau chaude automatique, désignée globalement par le chiffre 1, réalisée conformément à l'invention. Cette fontaine à eau chaude est destinée à la préparation de boissons infusées. Elle est destinée à être installée dans un local, par exemple dans une cuisine ou une salle de restaurant. La fontaine à eau chaude 1 est intégrée dans un meuble 2, partiellement esquissé, avec une paroi latérale 4, une paroi de fond 5 et un plateau supérieur 3, un panneau frontal étant omis pour laisser voir les éléments de la fontaine 1 disposés à l'intérieur du meuble 2.

Sur le plateau supérieur 3 sont disposés un robinet de distribution d'eau chaude 6, un bac de réception 7 et une platine de commande 8. Le robinet de distribution 6 comporte une embase 9 fixée au plateau 3 et un conduit en col de cygne 10 monté dans l'embase 9 avec une ouverture de sortie 11 située au-dessus du bac de réception 7. Le bac de réception 7 est encastré dans le plateau 3 au droit de l'ouverture de sortie 11 de manière qu'un récipient (non représenté), par exemple une théière, puisse être interposé entre le bac de réception 7 et l'ouverture de sortie 11 afin de recueillir de l'eau chaude distribuée par le robinet de distribution 6.

Le bac de réception 7 présente dans sa partie de fond une ouverture d'évacuation 12 qui relie le bac 7 avec un conduit d'évacuation 13. Le conduit d'évacuation 13 passe sous le plateau 3 et se termine par un moyen de connexion 14, par exemple un embout à vis, destiné à relier le conduit d'évacuation 13 à un réseau d'évacuation d'eau 82, lequel fait par exemple partie des équipements du local dans lequel la fontaine 1 est installée.

Sous le plateau 3 sont agencés d'autres éléments de la fontaine 1 qui sont cachés dans le corps du meuble 2 lorsque celui-ci est fermé. Ces éléments comportent une unité de commande et d'alimentation électrique 21, qui assure l'alimentation électrique et la commande automatique de différents composants de la fontaine 1, et un circuit d'eau 15 qui est relié par une première extrémité à un réseau de distribution d'eau potable froide 16, lequel fait par exemple partie des équipements du local dans lequel la fontaine 1 est installée, et par une deuxième extrémité au robinet de distribution 6, de manière à pouvoir conduire un flux d'eau depuis le réseau de distribution 16 jusqu'au robinet 6.

En partant de la première extrémité, le circuit d'eau 15 comprend successivement un moyen de connexion 17 pour la connexion du circuit 15 au réseau 16, une électrovanne 18 ou tout autre moyen d'obturation commandé, un moyen filtrant 19 et un moyen chauffant 20. Ces composants sont montés en série et reliés entre eux par des portions de tuyauterie aptes à conduire un flux d'eau, par exemple des tuyaux en plastique, métal ou autre. Il est à noter que la partie 15a du circuit 15 située entre le moyen de connexion 17 et le moyen chauffant 20 est conçue pour conduire un flux d'eau froide, c'est-à-dire plus précisément un flux d'eau à la température à laquelle l'eau sort du réseau 16 ; tandis que la partie 15b du circuit 15 située entre le moyen chauffant 20 et le robinet 6 inclus est conçue pour conduire un flux d'eau chaude, à une température qui est choisie par l'utilisateur, comme il sera expliqué plus bas. La partie 15b du circuit 15 est de préférence calorifugée et de courte longueur, pour minimiser les pertes de chaleur.

Un dispositif limiteur de pression 84 est interposé entre le réseau 16 et le moyen de connexion 17 pour empêcher une éventuelle surpression survenant dans le réseau de distribution d'eau d'endommager des composants du circuit 15. Par exemple, ce dispositif limiteur de pression ou détendeur est réglé pour limiter la pression d'eau admise dans le circuit 15 à un maximum de 2 ou 3 bar.

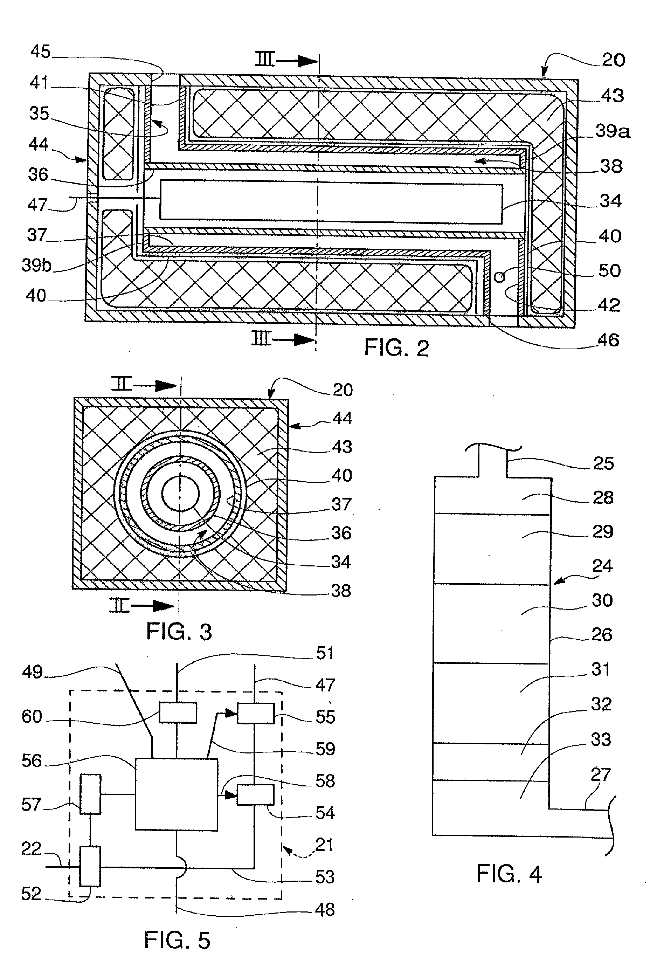

Le moyen filtrant 19 consiste en trois unités de filtration 24 identiques montées en série. La figure 4 représente de manière plus détaillée une unité de filtration 24 vue en coupe. Chaque unité de filtration 24 comporte un conduit d'entrée 25 qui débouche dans le haut d'une colonne de filtration 26 divisée en plusieurs étages, et un conduit de sortie 27 relié à la base de la colonne 26.

Dans la colonne 26, le premier étage de filtration 28 comporte une membrane filtre présentant une maille de sensiblement 5 micromètres pour retenir mécaniquement toutes les matières en suspension dans l'eau de taille supérieure à la maille. Le deuxième étage de filtration 29 et le troisième étage de filtration 30 comportent chacun une résine échangeuse d'ions ayant une structure poreuse. Une telle résine est un polymère sous forme de billes, de grains ou de poudre, possédant de groupes fonctionnels acides ou basiques qui éliminent les ions d'une solution en les remplaçant par des ions fixés dans la structure poreuse. La résine du deuxième étage 29 est choisie de manière à légèrement acidifier l'eau en lui conférant un pH compris sensiblement entre 6 et 7, à adoucir l'eau en lui conférant une dureté comprise sensiblement entre 12 et 18 degrés Fr, et à éliminer par adsorption des métaux lourds comme le plomb, le chrome, l'arsenic, le cadmium, etc. Par exemple, une résine convenant pour le deuxième étage 29 est celle connue sous la dénomination commerciale IMAC HP 333 (fabriquant : ROHM AND HAAS). Il s'agit d'une résine échangeuse de cations faiblement acide à groupement fonctionnels carboxyliques fixés sur un squelette polyacrylique.

La résine du troisième étage est choisie de manière à éliminer les ions nitrate, sulfate et éventuellement nitrite. Par exemple, une résine convenant pour le troisième étage 30 est celle connue sous la dénomination commerciale IMAC HP 555 (fabriquant : ROHM AND HAAS). Il s'agit d'une résine échangeuse d'anions fortement basique à structure macroporeuse, ayant des groupements fonctionnels d'ammonium quaternaire fixés sur un squelette en copolymère styrène-divinylbenzène.

Le quatrième étage 31 comporte un charbon actif, apte à éliminer de l'eau des matières organiques, des pesticides, des herbicides et le chlore. On rappelle qu'un charbon actif est une matière carbonée dont la structure poreuse a été développée grâce à un procédé d'oxydation contrôlée. Les pores ainsi obtenus développent une immense surface capable d'attirer des molécules par adsorption. Ce charbon actif améliore les aspects organoleptiques et chromatiques de l'eau.

Le cinquième étage 32 comporte une mousse filtrante pour réaliser une autre étape de filtrage mécanique de l'eau et le sixième étage 32 comporte un filtre membrane identique à celui du premier étage 28.

De préférence, un sixième étage de filtration, non représenté, est prévu pour éliminer par adsorption des composés organiques, particulièrement les pesticides. Par exemple, une résine convenant pour le sixième étage de filtration est celle connue sous la dénomination commerciale AMBERLITE XAD16HP (fabriquant : ROHM AND HAAS). Il s'agit d'un copolymère de polystyrène réticulé, hydrophobe et non ionique.

Le moyen filtrant 19 formé des trois unités de filtration montées en série permet d'obtenir en sortie, à partir d'eau du robinet potable ordinaire, une eau très pure, faiblement minéralisée, avec une pointe d'acidité pour faire ressortir les saveurs et arômes de l'infusion à préparer et totalement conforme à la réglementation européenne sur l'eau potable. L'eau en sortie du moyen filtrant 19 présente ainsi des qualités organoleptiques et chromatiques pleinement satisfaisantes pour la préparation d'une boisson infusée. Bien que le moyen filtrant représenté comporte trois unités de filtration 24 identiques, ce nombre peut être modifié, par exemple entre une et dix unités de filtration 24 ou plus, en fonction de la nature de l'eau admise depuis le réseau 16 et de préférences gustatives de l'utilisateur. De même, l'ordre et le volume des étages de filtration 28 à 33 au sein d'une unité de filtration 24 peut être adapté en fonction de la nature de l'eau admise, par exemple en supprimant ou en dupliquant certains de ces étages de filtration.

En référence aux figures 1, 2 et 3, le moyen chauffant 20 comporte une source de chaleur 34 disposée au voisinage d'une enceinte de chauffage d'eau 35 pour chauffer l'eau circulant dans l'enceinte 35. La source de chaleur 34 est une source de rayonnement thermique qui comprend une ou plusieurs lampe(s) à incandescence halogène(s) apte(s) à produire un rayonnement, notamment dans le spectre infrarouge, destiné à être absorbé par l'eau pour la chauffer. L'enceinte de chauffage 35 comporte une enveloppe interne 36 formant un tube qui entoure la source de chaleur 34, et une enveloppe externe 37 formant un tube sensiblement coaxial à l'enveloppe interne 36 et de plus grand diamètre qu'elle. Les enveloppes externe 37 et interne 36 sont assemblées de manière étanche au niveaux de leurs extrémités 39a et 39b, de manière à définir entre elles un espace de circulation d'eau 38 étanche. L'enveloppe externe 37 forme toutefois au niveau des extrémités respectives 39a et 39b un canal d'entrée 41 et un canal de sortie 42 qui sont ouverts.

Les enveloppes externe 37 et interne 36 sont fabriquées en un matériau transparent au rayonnement thermique produit par la source de chaleur 34, résistant aux chocs thermiques susceptibles de se produire lors de l'allumage des lampes, et chimiquement inerte vis-à-vis de l'eau. Le quartz, qui est une variété cristalline de silice très pure, fournit un tel matériau. Notamment, le quartz ne marque pas le goût de l'eau. Dans ce cas, les enveloppes 36 et 37 sont par exemple fabriquées par soufflage et assemblées par soudage. En revanche, le verre ordinaire ne présente pas une résistance aux chocs thermiques suffisante pour être utilisé dans la fabrication de l'enceinte de chauffage 35.

La surface extérieure de l'enveloppe externe 37 est entièrement recouverte d'un revêtement réfléchissant 40, par exemple un feuille d'aluminium ou d'or, pour réfléchir le rayonnement de la source de chaleur 34 vers l'espace de circulation 38, de manière à limiter les pertes de chaleur par rayonnement et à optimiser le rendement énergétique du moyen chauffant 20. L'isolation thermique est renforcée par un matelas de laine de verre 43 qui entoure complètement l'enceinte de chauffage 35. L'ensemble du moyen chauffant 20 est logé dans un boîtier de protection 44 en métal qui assure aussi un protection contre les chocs. Le boîtier 44 comporte une ouverture d'entrée 45 en face du canal d'entrée 41 et une ouverture de sortie 46 en face du canal de sortie 42, par lesquelles le moyen chauffant 20 est relié au circuit d'eau 15. Un passage est également ménagé à travers le boîtier 44, le matelas de laine de verre 43 et le revêtement réfléchissant 40 pour un câble d'alimentation électrique 47 reliant la source de chaleur 34 à l'unité de commande et d'alimentation électrique 21.

En référence à la figure 1, l'unité de commande et d'alimentation électrique 21 comporte un câble de connexion 22 pour sa connexion à un réseau de distribution d'électricité 23, lequel fait par exemple partie des équipements du local dans lequel la fontaine 1 est installée. L'unité de commande et d'alimentation électrique 21 est aussi reliée à la platine de commande 8 par des moyens de liaison 48 pour échanger des signaux de commande avec celle-ci, à l'électrovanne 18 par une ligne de commande 49 pour commander celle-ci, et à un capteur de température 50 par une ligne d'acquisition 51 pour acquérir des mesures de température d'eau. Le capteur de température 50, par exemple un thermocouple, est agencé de manière à mesurer la température de l'eau à l'intérieur du circuit 15 entre la sortie du moyen chauffant 20 et le robinet de distribution 6 inclus. Dans l'exemple représenté, le capteur 50 est à l'intérieur du canal de sortie 42 du moyen chauffant 20, comme mieux visible à la figure 2. On peut avantageusement prévoir un second thermocouple, non représenté, dans le canal d'entrée 41 de manière à mesurer un différentiel de température entre l'entrée et la sortie du moyen chauffant 20.

En référence à la figure 5, l'unité de commande et d'alimentation électrique 21 est représentée de manière plus détaillée. Le câble de connexion 22 réalise l'alimentation électrique générale de l'unité 21 par l'intermédiaire d'un circuit de protection contre les surtensions 52, comprenant par exemple un disjoncteur et des fusibles. Une ligne d'alimentation 53 relie le circuit de protection 52 au câble d'alimentation 47, pour réaliser l'alimentation du moyen chauffant 20 à la tension du réseau 23, par exemple 220V ou 380V. Un contacteur commandé 54 et un gradateur commandé 55 sont montés en série sur la ligne 53.

L'unité 21 comprend aussi un microcontrôleur 56 à microprocesseur apte à réaliser des opérations logiques pour assurer la commande automatique de la fontaine à eau chaude 1. Le microcontrôleur 56 est alimenté depuis le circuit de protection 52 par l'intermédiaire d'un transformateur 57 apte à délivrer un basse tension, par exemple de 24V. Le microcontrôleur 56 commande le contacteur commandé 54, comme indiqué par la flèche 58, de manière à alimenter ou non le moyen chauffant 20. Le microcontrôleur 56 commande le gradateur commandé 55 comme indiqué par la flèche 59, de manière à régler de manière graduelle l'intensité électrique alimentant le moyen chauffant 20, et donc la puissance de chauffage dissipée par la source de chaleur 34. La ligne d'acquisition 51 est reliée au microcontrôleur 56 par l'intermédiaire d'un circuit de conditionnement 60, comprenant par exemple un amplificateur et/ou un filtre.

L'électrovanne 18 est commandée par le microcontrôleur 56 entre un état fermé, dans lequel elle obture le circuit 15 et empêche une circulation d'eau et un état ouvert, dans lequel elle n'obture pas le circuit 15 et permet ainsi la circulation d'eau jusqu'au robinet 6. Lorsque l'électrovanne 18 est ouverte, un flux d'eau froide est admis depuis le réseau 16 à travers le circuit 15 et le robinet 6 jusqu'à l'ouverture de sortie 11 par laquelle il sort. Bien que l'électrovanne 18 soit située à l'entrée du circuit d'eau 15 dans le mode de réalisation représenté, elle pourrait en variante être située à tout autre niveau du circuit 15, par exemple devant l'entrée du robinet 6.

Le flux d'eau qui circule dans le circuit 15 lorsque l'électrovanne 18 est ouverte présente un débit constant imposé par la pression régnant dans le réseau 16 au niveau de l'entrée de la fontaine, et par la structure, en terme de longueur et de section, de l'ensemble du circuit 15 incluant le moyen filtrant 19 et le moyen chauffant 20. Le circuit 15 est conçu de manière que ce débit constant soit suffisant pour assurer une distribution d'eau chaude dans les quantités souhaitées en un temps raisonnable. Ainsi, on assure un débit minimal supérieur ou sensiblement égal à 1 cl/s, avantageusement supérieur ou égal à 2 cl/s et de préférence supérieur ou égal à 5 cl/s. Il est à noter que ce débit peut être adapté par la conception du circuit 15 en fonction de l'utilisation de la fontaine. Il est évident qu'un débit minimal doit être garanti pour assurer une ergonomie d'utilisation satisfaisante. Cependant, le débit n'est pas limité a priori quant à sa valeur maximale, autrement que par la conception du circuit 15 et la puissance du moyen chauffant. Par cette caractéristique, la fontaine à eau chaude 1 diffère d'une machine de préparation du café de type expresso, dans laquelle le débit d'eau est restreint de manière à assurer un temps de passage de l'eau à travers le compartiment à café suffisant pour la mise en solution des arômes du café.

En référence à la figure 1, la platine de commande 8 comporte un interrupteur général 61, par exemple un bouton poussoir, pour commuter l'alimentation électrique générale de la fontaine 1. Trois boutons 62a, 62b et 62c constituent un moyen de sélection de température pour sélectionner la température d'eau souhaitée en sortie de la fontaine. Chaque bouton 62a, 62b et 62c est affecté à une température de sortie prédéterminée distincte et produit, lorsqu'il est pressé, un signal de sélection de température distinct transmis par la liaison 48 au microcontrôleur 56. Un sélecteur de quantité 63 est également prévu, par exemple sous la forme d'un bouton rotatif, pour sélectionner la quantité d'eau devant être distribuée. Un écran d'affichage 64 est prévu pour afficher la température mesurée par le capteur 50. Enfin, un chronomètre avec alarme 65 est prévu pour mesurer une durée d'infusion souhaitée et signaler l'écoulement de cette durée.

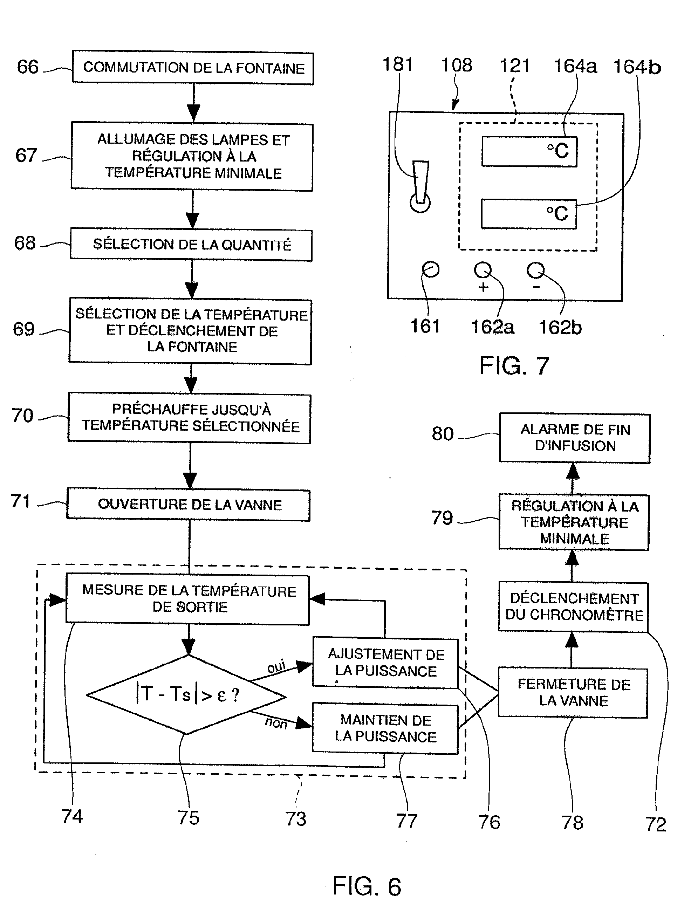

Le fonctionnement de la fontaine à eau chaude automatique 1 va maintenant être décrit en référence à la figure 6. Pour faire fonctionner la fontaine à partir d'un état éteint de celle-ci, l'utilisateur doit d'abord actionner l'interrupteur général 61, à l'étape 66, pour commuter l'alimentation électrique générale de la fontaine. La fontaine est alors à l'état allumé, ce qui s'ensuit immédiatement d'un allumage de la ou des lampe(s) de la source de chaleur 34, à l'étape 67, de manière à chauffer l'eau présente dans le moyen chauffant 20 jusqu'à la plus basse des températures prédéterminées sélectionnables. Si aucune action n'est entreprise, l'alimentation de la source de chaleur 34 est régulée par le microcontrôleur 56 de manière à maintenir l'eau présente dans le moyen chauffant 20 à cette température. On note que le risque de développement microbien dans le moyen chauffant 20 est minimisé en raison de sa faible capacité, par exemple de quelques centilitres, et de l'absence d'air dans l'ensemble du circuit 15.

A l'étape 68, l'utilisateur positionne le sélecteur de quantité 63 sur 1a quantité d'eau qu'il souhaite. Par exemple, le sélecteur 63 présente plusieurs positions prédéterminées, chaque position étant affectée à une quantité prédéterminée. Les quantités pouvant être sélectionnées sont équivalentes à, par exemple, une théière individuelle, une théière pour deux tasses, une théière pour quatre tasses, etc. Le sélecteur de quantité 63 envoie un signal de sélection de quantité correspondant au microcontrôleur 56. Ce signal de sélection de quantité est traduit par le microcontrôleur 56 en une durée de distribution correspondante, prédéterminée par expérimentation ou par calcul à partir du débit constant susmentionné, et mémorisée par le microcontrôleur 56.

A l'étape 69, l'utilisateur presse le bouton 62a ou 62b ou 62c correspondant à la température de l'eau qu'il souhaite obtenir en sortie pour préparer l'infusion. La température affectée à chaque bouton est indiquée sur ou à côté du bouton respectif correspondant. Par exemple, le bouton 62a est affecté à 60°C et plus particulièrement destiné à la préparation d'un thé vert du Japon, le bouton 62b est affecté à 70°C et plus particulièrement destiné à la préparation d'un thé blanc de Chine, le bouton 62c est affecté à 95°C et plus particulièrement destiné à la préparation d'un thé noir d'Inde. La dépression d'un des boutons 62a, 62b et 62c produit l'émission du signal de sélection de température correspondant qui est transmis au microcontrôleur 56. Dans le mode de réalisation représenté, chaque signal de sélection de température constitue aussi un signal de déclenchement apte à déclencher une distribution d'eau par la fontaine 1, chaque bouton 62a, 62b et 62c constituant également un moyen de déclenchement. Ainsi, une unique action de l'utilisateur produit simultanément la sélection de température de sortie et le déclenchement de la fontaine.

A l'étape 70, le microcontrôleur 56 règle par l'intermédiaire du gradateur 55 la puissance de chauffage dissipée par la source de chaleur 34 sur un niveau prédéterminé correspondant à la température sélectionnée, et la source de chaleur est préchauffée sans circulation d'eau pendant une durée prédéterminée. Cette durée peut être par exemple de l'ordre de 15 secondes ou moins. Un niveau de puissance de chauffage prédéterminé est prévu pour chaque température de sortie sélectionnable, ce niveau étant par exemple obtenu par expérimentation, de manière à obtenir en sortie de la fontaine la température de sortie correspondante. Les températures sélectionnables et les niveaux de réglage du gradateur 55 qui leur correspondent sont par exemple mémorisés par le microcontrôleur 56. Si la température sélectionnée à l'étape 69 est la plus basse parmi les températures sélectionnables, la durée de la préchauffe de l'étape 70 est sensiblement nulle.

A l'étape 71, à l'issue de la durée prédéterminée de préchauffe, le microcontrôleur 56 commande l'ouverture de l'électrovanne 18, ce qui produit une circulation du flux d'eau à débit constant dans le circuit 15, ce flux étant filtré par le moyen filtrant 19 et chauffé par le moyen chauffant 20, et une distribution d'eau à la température de sortie sélectionnée. L'utilisateur tient ou pose sous la sortie d'eau 11 un récipient dans lequel ont été placées les substances à infuser, par exemple du thé, de manière à recueillir l'eau distribuée. En l'absence de récipient sous l'ouverture de sortie 11 pendant la distribution d'eau chaude, celle-ci est reçue dans le bac 7 et évacuée par le conduit 13 vers le réseau d'évacuation 82.

Bien que la puissance de chauffage soit prédéterminée pour produire en sortie de l'eau à la température sélectionnée, une variation inopinée du débit, par exemple suite à une variation de la pression dans le réseau d'eau 16 ou à une variation de la capacité calorifique de l'eau du fait d'un changement de sa minéralisation, peut entraîner un écart entre la température sélectionnée et la température de sortie effective de l'eau. Pour remédier à ce problème, le microcontrôleur 56 réalise pendant la distribution d'eau chaude une boucle de contrôle de température 73 qui comporte les étapes suivantes :
- étape 74 : acquisition d'une mesure de température depuis le capteur 50,
- étape 75 : comparaison de la valeur absolue de l'écart entre la température mesurée T et la température sélectionnée Ts avec un écart maximal toléré ε, valant par exemple 1 à 3°C,
- étape 76 : si l'écart maximal tolérée est dépassé, ajustement de la puissance de chauffage au moyen du gradateur 55, l'ajustement étant réalisé dans le sens de l'augmentation si T<Ts et dans le sens de la diminution si T>Ts,
- étape 77: si l'écart maximal toléré n'est pas dépassé, maintien à niveau de la puissance de chauffage.

Lorsque la durée de distribution correspondant à la position du sélecteur de quantité 63 est écoulée depuis l'ouverture de l'électrovanne 18, le microcontrôleur 56 commande la fermeture de l'électrovanne à l'étape 78.

Au même instant, à l'étape 72, le chronomètre 65 est déclenché pour mesurer une durée d'infusion prédéterminée.

En l'absence de nouvel actionnement des boutons de sélection de température, à l'étape 79, le microcontrôleur 56 reprend la régulation de la puissance de chauffage de manière à maintenir l'eau présente dans le moyen chauffant 20 à la plus basse des températures sélectionnables, comme à l'étape 67. Une dépression d'un des boutons 62a, 62b et 62c entraîne une répétition du procédé depuis l'étape 69.

Lorsque la durée d'infusion prédéterminée est écoulée, à l'étape 80, l'alarme du chronomètre 65 se déclenche pour signaler que l'infusion est prête à être servie. La durée d'infusion est prédéterminée selon le goût de l'utilisateur de manière à permettre une libération des arômes et des tanins des substances infusées dans l'eau chaude.

Le microcontrôleur est de préférence programmable, de sorte que tous les paramètres, soit les températures sélectionnables, les niveaux de réglage de puissance correspondants, les durées de préchauffe correspondantes, les quantités sélectionnables, les durées de distribution correspondantes, l'écart de température maximal toléré et la durée d'infusion peuvent être modifiés par le biais d'un module logiciel exécuté par le microcontrôleur 56.

Le nombre de températures sélectionnables peut être quelconque. Les valeurs des températures sélectionnables ne sont pas limitées aux valeurs du mode de réalisation décrit. Les températures sélectionnables peuvent avoir toute valeur comprise entre la température de l'eau admise depuis le réseau 16 et la température de vaporisation de l'eau. Ainsi, le tableau 1 donne des exemples de types d'infusions et, pour chaque type, une température ou fourchette de températures définissant la température sélectionnable associée. On peut même prévoir une sélection supérieure à la température de vaporisation de l'eau pour distribuer un jet de vapeur d'eau à l'aide de la fontaine automatique.

Les boutons de sélection de température 62a, 62b et 62c peuvent être remplacés par tout autre moyen de sélection de température, comme un unique sélecteur à plusieurs positions. De préférence, le nom du type d'infusion est marqué sur ou à proximité du bouton de sélection correspondant, respectivement de la position correspondante du sélecteur.

**Tableau 1 :**

| exemples de types d'infusion et de températures sélectionnables associées à chacun | |
|---|---|
| Types d'infusion | Température sélectionnable (°C) |
| Thé noir | 95 |
| Thé vert | 60 - 95 |
| Thé vert à arôme délicat | 60 - 75 |
| Thé ver fort et insistant | 75 - 95 |
| Gyokuro | 50 - 60 |
| Matcha | Environ 50 |
| Sencha | 70 - 95 |
| Genmaicha | 90 - 95 |
| Thé blanc | 70 - 85 |
| Thé blanc exceptionnel | 50 - 70 |

Dans une variante de réalisation, on prévoit un moyen de déclenchement distinct du moyen de sélection de température. Dans l'exemple représenté à la figure 1, le moyen de déclenchement est un bouton de déclenchement 81 agencé sur la platine de commande 8 et apte à délivrer au microcontrôleur 56 un signal de déclenchement distinct des signaux de sélection de température. Dans cette variante, le procédé de commande de la fontaine automatique est modifié uniquement en ce que l'étape de commande 69 de la figure 6 est remplacée par deux étapes distinctes : une étape de sélection de température avec le moyen de sélection de température et une étape de déclenchement avec le moyen de déclenchement.

Dans une autre variante de réalisation de l'invention, la quantité d'eau distribuée en réponse au signal de déclenchement n'est pas déterminée automatiquement, mais est contrôlée manuellement par l'utilisateur. La figure 7 représente une platine de commande 108 et une unité de commande 121 destinées à remplacer la platiné de commande 8 et l'unité de commande 21 de la fontaine à eau chaude 1 de la figure 1 dans le cadre de cette variante de réalisation, les autres composants de la fontaine étant inchangés.

La platine de commande 108 comporte un interrupteur général 161, un premier écran 164a pour afficher la température de sortie souhaitée Ts et un second écran 164b pour afficher la température d'eau T mesurée par le thermocouple 50. Le moyen de sélection de température consiste en deux boutons 162a et 162b actionnable pour respectivement augmenter et diminuer la température d'eau souhaitée affichée sur le premier écran 164a par incréments prédéterminés, par exemple par incréments de 0,5 ou 1°C. Le moyen de déclenchement est un interrupteur à bascule 181 actionnable entre un position neutre et une position active pour envoyer le signal de déclenchement à l'unité de commande 121.

L'unité de commande 121 est placée sous la platine de commande 108, comme représentée en traits interrompus à la figure 7. L'unité de commande 121 est simplifiée par rapport à l'unité de commande 21 dans la mesure où elle n'assure pas les fonctions de contrôle automatique de la préchauffe et de la commande automatique de la vanne 18.

Dans cette variante de réalisation, le fonctionnement de la fontaine automatique est le suivant : l'utilisateur actionne l'interrupteur général 161 pour commuter l'alimentation électrique générale de la fontaine. La fontaine est alors à l'état allumé. Une valeur initiale de température souhaitée Ts est affichée sur le premier écran 164a. La valeur de température mesurée T est affichée sur le second écran 164b. Si la valeur initiale n'est pas la température de sortie souhaitée par l'utilisateur, l'utilisateur modifie la valeur de température souhaitée Ts affichée sur le premier écran 164a à l'aide des boutons 162a et 162b. L'unité de commande 121 reçoit le signal de sélection de température correspondant et commande l'alimentation du moyen chauffant 20 de manière à amener l'eau présente dans le moyen chauffant 20 à une température égale à la valeur de température de sortie souhaitée Ts affichée sur le premier écran 164a. Puis l'unité de commande 121 réalise la boucle de contrôle de température 73 comme susmentionné de manière à maintenir l'eau sensiblement à ladite température souhaitée.

L'utilisateur visualise sur le second écran 164b l'évolution de la température d'eau T mesurée dans le moyen chauffant 20 et, lorsque celle-ci est égale à la valeur de température souhaitée Ts, il commande manuellement l'ouverture de la vanne 18 en basculant l'interrupteur 181 en position active. La vanne 18 reste ouverte tant que l'interrupteur 181 reste en position active. L'utilisateur tient ou pose sous la sortie d'eau 11 un récipient dans lequel ont été placées les substances à infuser, par exemple du thé, de manière à recueillir l'eau distribuée et il contrôle visuellement la quantité d'eau distribuée pour interrompre le distribution d'eau en ramenant l'interrupteur 181 en position neutre lorsque la quantité d'eau souhaitée a été distribuée.

Pendant la distribution d'eau tout comme en l'absence de distribution d'eau, l'unité de commande 121 effectue une régulation de la puissance de chauffage de manière à maintenir l'eau présente dans le moyen chauffant 20 à la température Ts affichée sur le premier écran 164a.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Fontaine à eau chaude automatique (1) pour la préparation de boissons infusées, **caractérisée par le fait qu'**elle comporte :
- une entrée d'eau (17) apte à être reliée à un réseau de distribution d'eau froide (16) pour admettre de l'eau froide depuis ledit réseau de distribution,
- un organe de distribution d'eau (6) comportant une ouverture de sortie (11) et apte à distribuer de l'eau à travers ladite ouverture de sortie,
- un circuit d'eau (15) apte à conduire un flux d'eau depuis ladite entrée d'eau jusqu'audit organe de distribution d'eau, ledit circuit comprenant un moyen filtrant (19) apte à filtrer ledit flux d'eau et un moyen chauffant (20) apte à chauffer ledit flux d'eau,
- un moyen d'obturation commandé (18) apte à autoriser et à interdire une circulation dudit flux d'eau dans ledit circuit,
- un moyen de réglage de puissance commandé (55) apte à régler une puissance de chauffage dissipée par ledit moyen chauffant,
- un moyen de sélection de température (62a-c, 162a-b) actionnable par un utilisateur pour sélectionner une température de sortie souhaitée (Ts) dudit flux d'eau au niveau de l'organe de distribution,
- un moyen de déclenchement (62a-c, 81, 181) actionnable par un utilisateur pour déclencher une distribution d'eau chaude par ladite fontaine,
- une unité de commande (21, 121) apte à recevoir depuis ledit moyen de déclenchement un signal de déclenchement et à recevoir depuis ledit moyen de sélection de température un signal de sélection de température représentatif de ladite température de sortie souhaitée (Ts), ladite unité de commande étant apte à répondre audit signal de déclenchement en commandant, d'une part, ledit moyen d'obturation (18) pour autoriser une circulation dudit flux d'eau dans le circuit (15) et, d'autre part, ledit moyen de réglage (55) pour régler la puissance de chauffage dissipée par le moyen chauffant en fonction dudit signal de sélection de température, de sorte qu'une quantité d'eau, portée sensiblement à la température de sortie souhaitée représentée par le signal de sélection de température, est distribuée par l'intermédiaire de l'organe de distribution en réponse audit signal de déclenchement.

2. Fontaine à eau chaude automatique selon la revendication 1, **caractérisée par le fait qu'**elle comporte un capteur de température (50) agencé de manière à mesurer une température dudit flux d'eau à un niveau compris inclusivement entre une sortie (46) du moyen chauffant (20) et l'organe de distribution (6), ladite unité de commande (21) étant apte à recevoir depuis ledit capteur de température un signal de mesure représentatif de la température d'eau mesurée par ledit capteur, ladite unité de commande étant apte à commander le moyen de réglage de puissance (55) en fonction dudit signal de mesure de manière à modifier la puissance de chauffage dissipée par le moyen chauffant lorsqu'un écart entre ladite température mesurée (T) et la température de sortie souhaitée (Ts) est supérieur à une valeur prédéterminée (ε).

3. Fontaine à eau chaude automatique selon la revendication 2, **caractérisée par le fait qu'**elle comporte un moyen d'affichage (64, 164a, 164b) pour afficher la valeur de température d'eau (T) mesurée par ledit capteur (50) et représentée par ledit signal de mesure et/ou la température de sortie souhaitée (Ts).

4. Fontaine à eau chaude automatique selon l'une des revendications 1 à 3, **caractérisée par le fait que** le moyen de sélection de température (62a-c) est actionnable pour sélectionner ladite température souhaitée parmi un ensemble de valeurs prédéfinies, chaque valeur prédéfinie correspondant à un type d'infusion à préparer, lesdites valeurs prédéfinies comprenant une valeur entre 60°C et 95°C pour la préparation d'une infusion de thé vert, une valeur entre 50°C et 85°C pour la préparation d'une infusion de thé blanc et une valeur de sensiblement 95°C pour la préparation d'une infusion de thé noir.

5. Fontaine à eau chaude automatique selon l'une des revendications 1 à 4, **caractérisée par le fait qu'**elle distribue une quantité d'eau déterminée en réponse au signal déclenchement, ladite unité de commande (21) étant apte à commander successivement en réponse audit signal de déclenchement : une préchauffe (70) du moyen chauffant (20) sans circulation d'eau, une ouverture (71) du moyen d'obturation (18) pour autoriser la circulation dudit flux d'eau pendant une durée déterminée et une fermeture du moyen d'obturation pour interrompre la circulation du flux d'eau, ladite unité de commande étant apte à adapter une durée de ladite préchauffe du moyen chauffant en fonction du signal de sélection de température.

6. Fontaine à eau chaude automatique selon la revendication 5, **caractérisée par le fait qu'**elle comporte un moyen de sélection de quantité d'eau (63) actionnable par un utilisateur pour sélectionner une quantité d'eau souhaitée, ladite unité de commande étant apte à recevoir depuis ledit moyen de sélection de quantité d'eau un signal de sélection de quantité représentatif de la quantité d'eau souhaitée, l'unité de commande (21) étant apte à adapter ladite durée d'ouverture de l'organe d'obturation (18) en fonction dudit signal de sélection de quantité de manière que ladite quantité d'eau distribuée par l'intermédiaire de l'organe de distribution (6) en réponse au signal de déclenchement soit sensiblement égale à la quantité souhaitée, représentée par le signal de sélection de quantité.

7. Fontaine à eau chaude automatique selon l'une des revendications 1 à 6, **caractérisée par le fait qu'**elle comporte un chronomètre et une alarme (65), ladite unité de commande (21) étant apte à déclencher ledit chronomètre à la fin de la distribution d'eau pour mesurer une durée d'infusion prédéterminée et à déclencher ladite alarme à la fin de ladite durée d'infusion.

8. Fontaine à eau chaude automatique selon l'une des revendications 1 à 7, **caractérisée par le fait que** le moyen de déclenchement est constitué par le moyen de sélection de température (62a-c) et que le signal de déclenchement est constitué par le signal de sélection de température.

9. Fontaine à eau chaude automatique selon l'une des revendications 1 à 8, **caractérisée par le fait que** le moyen chauffant (20) comporte une source de rayonnement thermique (34), une enveloppe interne (36) étanche à l'eau et transparente audit rayonnement thermique qui entoure ladite source de rayonnement, une enveloppe externe (37) étanche à l'eau qui est assemblée à ladite enveloppe interne de manière à définir entre elles un espace de circulation d'eau (38), un passage d'entrée (41) et un passage de sortie d'eau (42) étant ménagés dans ladite enveloppe externe à deux extrémités (39a, 39b) de celle-ci pour permettre une traversée du moyen chauffant par ledit flux d'eau.

10. Fontaine à eau chaude automatique selon la revendication 9, **caractérisée par le fait que** l'enveloppe interne (36) et l'enveloppe externe (37) sont réalisées en quartz, l'enveloppe externe portant un revêtement extérieur réfléchissant (40) pour réfléchir ledit rayonnement thermique vers l'espace de circulation d'eau (38).

11. Fontaine à eau chaude automatique selon l'une des revendications 1 à 10, **caractérisée par le fait que** le moyen filtrant (19) comporte au moins un étage de filtration mécanique (28, 33) par une membrane apte à retenir des matières en suspension de taille supérieure à 5 micromètres, et/ou au moins un étage de filtration par une résine échangeuse d'ion (29) apte à éliminer du flux d'eau des métaux lourds, et/ou au moins un étage de filtration par une résine échangeuse d'ion (30) apte à éliminer du flux d'eau des ions nitrate, nitrite et sulfate, et et/ou au moins un étage de filtration par un charbon actif (31) apte à éliminer du flux d'eau des matières organiques incluant des herbicides, des pesticides et des composés chlorés et/ou au moins un étage de filtration par une résine adsorbante apte à éliminer du flux d'eau les pesticides.

12. Fontaine à eau chaude automatique selon l'une des revendications 1 à 11, **caractérisée par le fait que** le moyen filtrant (19) est apte à traiter l'eau admise depuis le réseau de distribution de manière qu'elle présente un pH compris entre 6 et 7 et une dureté comprise entre 12 et 18 degrés Fr à la sortie (27) du moyen filtrant.

13. Fontaine à eau chaude automatique selon l'une des revendications 1 à 12, **caractérisée par le fait qu'**elle comporte un moyen de réception d'eau (7) apte à recevoir ledit flux d'eau à l'extérieur de l'ouverture de sortie de l'organe de distribution, ledit moyen de réception étant relié à un moyen d'évacuation (13) pour évacuer ledit flux d'eau depuis ledit moyen de réception, ladite fontaine étant conçue et agencée de manière intégrée à un meuble (2), ledit meuble comportant un plateau supérieur (3) sur lequel sont disposés l'organe de distribution (6), le moyen de réception d'eau (7), le moyen de sélection de température (62a-c, 162a-b), le moyen de déclenchement (62a-c, 81, 181), l'éventuel moyen de sélection de quantité (63) et l'éventuel moyen d'affichage (64, 164a-b), ledit meuble comportant un corps (4, 5) sur lequel repose ledit plateau supérieur et dans lequel sont disposés le circuit d'eau (15), le moyen de réglage de puissance (55), le moyen d'obturation (18), l'unité de commande (21, 121), et des moyens (22, 47, 49) pour alimenter en électricité le moyen chauffant (20), le moyen d'obturation (18) et l'unité de commande (21, 121).
